# EUROPEAN PATENT APPLICATION

(11) **EP 4 624 729 A1**
(43) Date of publication of application: **01.10.2025**
(21) Application number: 25155768.2
(22) Date of filing: 04.02.2025
(51) Int. Cl.: F01N 3/10

(54) **EXHAUST SYSTEM AND ENGINE SYSTEM**

(30) Priority: 26.03.2024 JP 2024049947
(71) Applicant: MAZDA MOTOR CORPORATION, Hiroshima 730-8670 (JP)
(72) Inventor: YAMAGATA, Naoyuki, Aki-gun, Hiroshima, 730-8670 (JP); MATSUMOTO, Takamasa, Aki-gun, Hiroshima, 730-8670 (JP); MIYAWAKI, Hiroki, Aki-gun, Hiroshima, 730-8670 (JP)
(74) Representative: Müller-Boré & Partner Patentanwälte PartG mbB

(57) **Abstract**

An exhaust passage 50 includes a first exhaust passage 51 which is opened and closed by a first exhaust valve 23, a second exhaust passage 52 through which exhaust gas is caused to flow independently from the first exhaust passage 51 and which is opened and closed by a second exhaust valve 24, and a third exhaust passage 53 in which the first exhaust passage 51 and the second exhaust passage 52 merge together, and exhaust catalysts include a main exhaust catalyst 60 which is provided in the third exhaust passage 53 and an auxiliary exhaust catalyst 61 which is arranged in the first exhaust passage 51 and has a smaller capacity than the main exhaust catalyst 60.

## Description

### [Technical Field]

The invention relates to an exhaust system. The invention also relates to an engine system.

### [Background Art]

In related art, an exhaust system has been known in which a plurality of exhaust catalysts are arranged in an exhaust passage.

Patent Literature 1 discloses an exhaust gas purification apparatus for an internal combustion engine, in which a first catalyst (auxiliary exhaust catalyst) having an oxidation function is arranged in an exhaust passage which starts from an exhaust manifold collection portion and reaches an exhaust turbine of an exhaust turbocharger and a second catalyst (auxiliary exhaust catalyst) which has a larger capacity than that of the first catalyst is arranged in the exhaust passage in a downstream position relative to the exhaust turbine.

### [Citation List]

### [Patent Literature]

[Patent Literature 1] Japanese Patent Laid-Open No. 2005-113803

### [Summary]

### [Problems to be Solved]

However, in the exhaust system disclosed in Patent Literature 1, exhaust gas necessarily passes through the auxiliary exhaust catalyst before flowing into the main exhaust catalyst. Thus, when an operation region of the engine is an operation region in which a flow amount of the exhaust gas is large, a large amount of exhaust gas passes through the auxiliary exhaust catalyst, and the auxiliary exhaust catalyst might thereby be subject to thermal degradation.

The invention has been made in consideration of such a point, and an object thereof is to inhibit thermal degradation of an auxiliary exhaust catalyst when the auxiliary exhaust catalyst is provided on an upstream side relative to a main exhaust catalyst.

### [Means for Solving the Problem]

The above problem is solved by the invention as defined in claim 1. Particularly, a first aspect of an exhaust system includes: an exhaust passage through which exhaust gas flows; a first exhaust valve and a second exhaust valve, each of which opens and/or closes a portion between a combustion chamber of an engine and the exhaust passage; and a plurality of exhaust catalysts which are provided in the exhaust passage and purify the exhaust gas. The exhaust passage includes a first exhaust passage which is opened and/or closed by the first exhaust valve, a second exhaust passage through which the exhaust gas is caused to flow independently from the first exhaust passage and which is opened and/or closed by the second exhaust valve, and a third exhaust passage in which the first exhaust passage and the second exhaust passage merge together. The exhaust catalysts include a main exhaust catalyst which is provided in the third exhaust passage and an auxiliary exhaust catalyst which is arranged in the first exhaust passage and has a smaller capacity than the main exhaust catalyst.

In the first aspect, the exhaust system has the first exhaust passage and the second exhaust passage which can cause the exhaust gas to flow independently from each other, and the auxiliary exhaust catalyst is provided only in the first exhaust passage. Thus, when a flow amount of the exhaust gas is large, the flow amount of the exhaust gas in the first exhaust passage is made smaller than the flow amount of the exhaust gas in the second exhaust passage, and the exhaust system can thereby inhibit a large amount of exhaust gas from passing through the auxiliary exhaust catalyst. The exhaust system can inhibit thermal degradation of the auxiliary exhaust catalyst.

As for a second aspect, in the first aspect, the second exhaust passage may have an ejector.

In the second aspect, because the exhaust gas in the second exhaust passage can be caused to flow as early as possible, exhaust interference in the second exhaust passage can be inhibited.

As for a third aspect, in the first or second aspect, the exhaust system may further include: a flow amount adjustment unit which adjusts a flow amount of the exhaust gas from the second exhaust passage to the third exhaust passage; and a controller which actuates the flow amount adjustment unit. When an operation state of the engine belongs to a first operation region in which an engine load is smaller than a predetermined load and an engine speed is lower than a predetermined revolution speed, the controller may actuate the flow amount adjustment unit so as to stop a flow of the exhaust gas from the second exhaust passage to the third exhaust passage.

In the third aspect, the auxiliary exhaust catalyst can efficiently be warmed up. That is, when the operation state of the engine is in the first operation region, because an exhaust gas amount is comparatively small, the exhaust gas is caused to flow only through the first exhaust passage. Accordingly, the exhaust system can efficiently warm up the auxiliary exhaust catalyst even when the exhaust gas amount is small.

As for a fourth aspect, in the third aspect, when the operation state of the engine belongs to the first operation region and the engine is in a cold state, the controller may make a valve opening time of the first exhaust valve be retarded, compared to a case where the operation state of the engine belongs to the first operation region and the engine is in a warm state, and be later than a timing at which a piston of the engine is positioned at a bottom dead center in an expansion stroke.

In the fourth aspect, because when the engine is in the cold state, the exhaust gas is compressed by a rise of the piston, a temperature of the exhaust gas rises. Because the first exhaust valve is thereafter opened, the exhaust gas at a high temperature flows into the first exhaust passage. Accordingly, the exhaust system can efficiently warm up the auxiliary exhaust catalyst when the engine is in the cold state.

As for a fifth aspect, in the fourth aspect, when the operation state of the engine belongs to the first operation region and the engine is in the warm state, the controller may set a valve opening period of the first exhaust valve to a period which includes the timing at which the piston of the engine is positioned at the bottom dead center in the expansion stroke.

In the fifth aspect, when the engine is in the warm state, the exhaust gas at a temperature, which is as low as possible, can be caused to flow through the first exhaust passage. Accordingly, the exhaust system can inhibit thermal degradation of the auxiliary exhaust catalyst.

As for a sixth aspect, in the first aspect, the exhaust system may further include a controller which actuates the first exhaust valve and the second exhaust valve, and when an operation state of the engine belongs to a second operation region in which the engine load is equal to or greater than a predetermined load and the engine speed is equal to or higher than a predetermined revolution speed, the controller may retard a valve opening time of the first exhaust valve relatively to a valve opening time of the second exhaust valve.

In the sixth aspect, the second exhaust valve is opened earlier than the first exhaust valve, the exhaust gas at a comparatively high temperature thereby flows into the second exhaust passage, and the exhaust gas at a comparatively low temperature flows into the first exhaust passage. Accordingly, the exhaust system can inhibit thermal degradation of the auxiliary exhaust catalyst. Further, the exhaust system can efficiently warm up the main exhaust catalyst.

As for a seventh aspect, in the sixth aspect, when the operation state of the engine belongs to the second operation region, the controller may make the valve opening period of the second exhaust valve be longer than the valve opening period of the first exhaust valve.

In the seventh aspect, the exhaust gas is caused to flow into the second exhaust passage as much as possible, and the flow amount of the exhaust gas in the first exhaust passage can thereby be decreased. Accordingly, the exhaust system can inhibit thermal degradation of the auxiliary exhaust catalyst. Further, the exhaust system can efficiently warm up the main exhaust catalyst.

As for an eighth aspect, in the sixth or seventh aspect, when the operation state of the engine belongs to the second operation region, the controller may cause the second exhaust valve to be opened before a timing at which a piston of the engine is positioned at a bottom dead center in an expansion stroke.

In the eighth aspect, the second exhaust valve is opened in a state where the exhaust gas is more compressed than at the timing at which the piston of the engine is at the bottom dead center. Accordingly, as large amount as possible of the exhaust gas at a comparatively high temperature can be caused to flow into the second exhaust passage. On the other hand, only as small amount as possible of the exhaust gas at a comparatively low temperature can be caused to flow into the first exhaust passage. Accordingly, the exhaust system can inhibit thermal degradation of the auxiliary exhaust catalyst. Further, the exhaust system can efficiently warm up the main exhaust catalyst.

As for a ninth aspect, in any one of the first to eighth aspects, a turbine housing, in which a turbine of a turbocharger is arranged, may be arranged in a portion in the third exhaust passage on an upstream side relative to the main exhaust catalyst.

In the ninth aspect, the turbine housing is arranged in the third exhaust passage, and an exhaust system can thereby efficiently transmit exhaust energy to the turbine.

### [Effect of Invention]

As described in the foregoing, according to the technique disclosed herein, an exhaust system can inhibit thermal degradation of an auxiliary exhaust catalyst.

### [Brief Description of Drawings]

FIG. 1 is an outline diagram illustrating an engine system having an exhaust system according to an example embodiment.
FIG. 2 is a cross-sectional view illustrating a combustion chamber of an engine.
FIG. 3 is a block diagram illustrating a control system of an engine.
FIG. 4 is a map illustrating a relationship between an operation state of the engine and open-close control of exhaust valves.
FIG. 5 is a diagram illustrating open-close actions of the exhaust valves in first exhaust valve control.
FIG. 6 is a diagram illustrating open-close actions of the exhaust valves in second exhaust valve control.
FIG. 7 is a diagram illustrating open-close actions of the exhaust valves in third exhaust valve control.
FIG. 8 is a flowchart illustrating, as an example, the open-close control of the exhaust valves, which is executed by an ECU.
FIG. 9 is an outline diagram illustrating an engine system having an exhaust system according to a modification.

### [Embodiment for Carrying Out the Invention]

Example embodiments will hereinafter be described in detail with reference to drawings.

### (1) General Configuration of Engine System

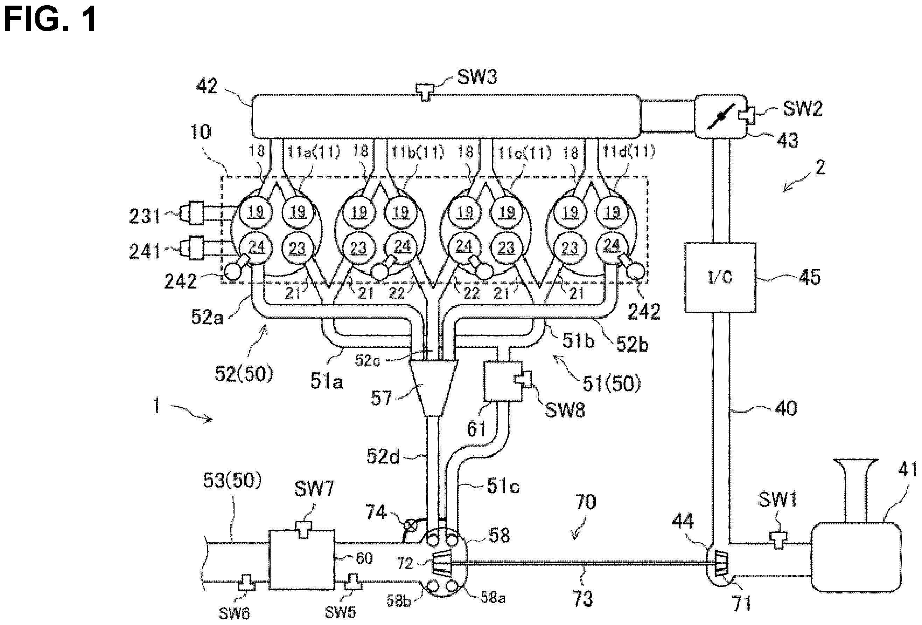

FIG. 1 illustrates an outline of an engine system. The engine system has an engine 10, an intake system 2, an exhaust system 1, and a turbocharger 70.

### (1-1) Engine

The engine 10 has one or more cylinders 11. In each of the cylinders 11, an intake stroke, a compression stroke, an expansion stroke, and an exhaust stroke are repeated. The engine 10 may be a four-stroke engine. The engine 10 is installed e.g., in a four-wheel automobile. The engine 10 operates, and the automobile thereby travels.

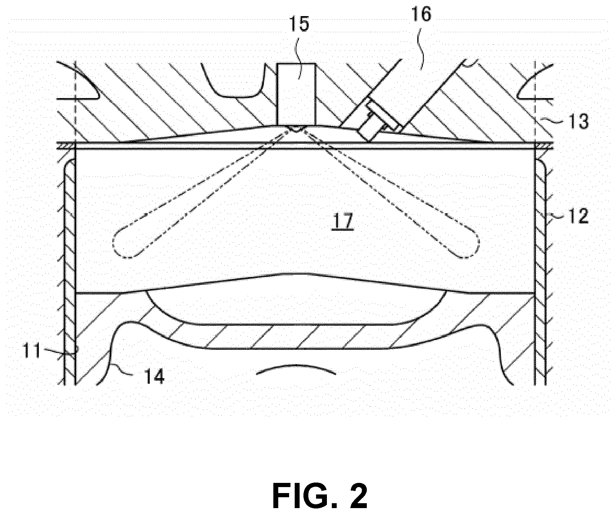

The engine 10 is a multi-cylinder engine having a plurality (four herein) of cylinders. For example, as illustrated in FIG. 2, a cylinder block 12 and a cylinder head 13 are provided. The cylinder head 13 is placed on the cylinder block 12. The cylinders 11 are formed in the cylinder block 12. The four cylinders 11 are aligned in a straight line.

Particularly, a piston 14 is inserted (housed) in each of the cylinders 11. The piston 14 is coupled with a crankshaft via a connecting rod. The piston 14 reciprocates in an internal portion of the cylinder 11. The piston 14, the cylinder 11, and the cylinder head 13 form a combustion chamber 17.

Injectors 15 which inject fuel into the cylinders 11 may be mounted on the engine 10. Each of the injectors 15 directly injects fuel into the cylinder 11. Further, spark plugs 16 which ignite air-fuel mixture containing the fuel injected from the injectors 15 may be mounted on the engine 10.

In the four cylinders 11, the expansion stroke is executed in predetermined order. For example, in FIG. 1, when the four cylinders 11 are denoted as a first cylinder 11a, a second cylinder 11b, a third cylinder 11c, and a fourth cylinder 11d in order from the left side of the page, in the present embodiment, the expansion stroke is executed in order of the first cylinder 11a, the third cylinder 11c, the fourth cylinder 11d, and the second cylinder 11b.

### (1-2) Intake System

The intake system 2 introduces intake air into the engine 10. As illustrated in FIG. 1, the intake system has intake ports 18 which are provided in the engine 10 and an intake passage 40 which communicates with the intake ports 18.

The intake port 18 is formed for each of the cylinders 11. Particularly, the intake port 18 communicates with an interior of the combustion chamber 17.

An intake valve 19 may be disposed in the intake port 18. The intake valve 19 opens and/or closes the intake port 18. A valve operating apparatus may be connected with each of the intake valves 19.

The valve operating apparatus opens and/or closes each of the intake valves 19 at a predetermined timing. The valve operating apparatus may be a variable valve operating apparatus which makes at least one of a valve timing and a valve lift be variable.

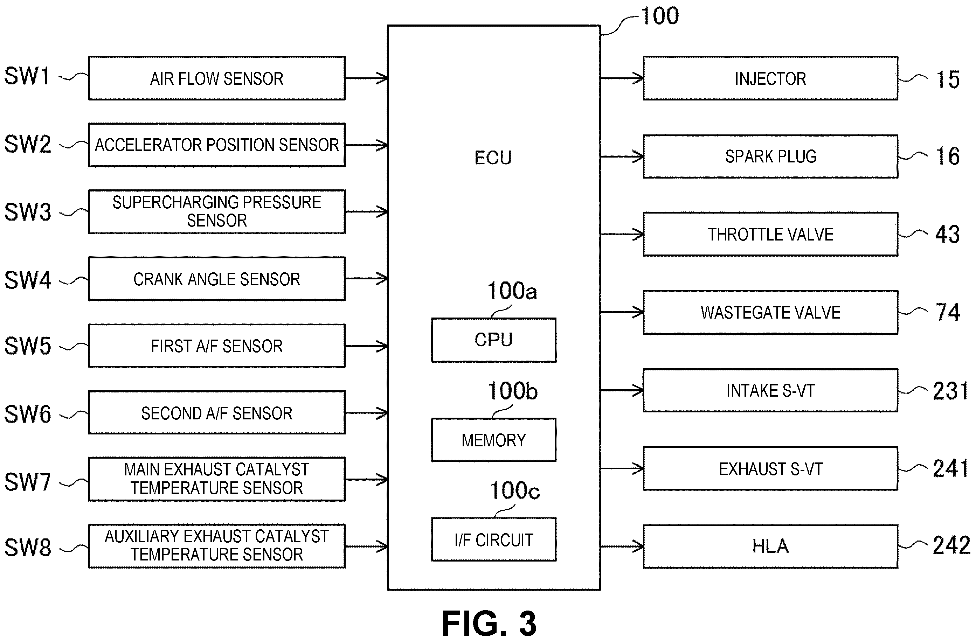

As illustrated in FIG. 3, the valve operating apparatus has an intake S-VT (sequential-valve timing) 231. The intake S-VT 231 may be of a hydraulic type or an electric type. For example, the intake S-VT 231 continuously changes a rotation phase of an intake camshaft in a predetermined angle range.

The intake passage 40 communicates with the intake port 18 of each of the cylinders 11. Air to be introduced into the cylinders 11 flows through the intake passage 40.

An air cleaner 41 may be disposed in an upstream end portion of the intake passage 40. The air cleaner 41 filters air.

A surge tank 42 may be disposed in the vicinity of a downstream end of the intake passage 40. The intake passage 40 in a downstream position relative to the surge tank 42 configures independent passages which branch for the respective cylinders 11. A downstream end of the independent passage is connected with the intake port 18 of each of the cylinders 11.

A throttle valve 43 may be arranged between the air cleaner 41 and the surge tank 42 in the intake passage 40. Between the air cleaner 41 and the throttle valve 43 in the intake passage 40, a compressor housing 44 may be provided in which a compressor 71 of the turbocharger 70 is arranged. Between the compressor 71 and the throttle valve 43 in the intake passage 40, an intercooler 45 may be arranged which cools supercharged air.

### (1-3) Exhaust System

The exhaust system 1 discharges exhaust gas from the combustion chambers 17. The exhaust system 1 may have one or more exhaust ports, particularly first exhaust port(s) 21 and second exhaust port(s) 22 which are provided in the engine 10. The exhaust system 1 has an exhaust passage 50 through which exhaust gas exhausted from the first exhaust ports 21 and the second exhaust ports 22 may flow, and a main exhaust catalyst 60 which is provided in the exhaust passage 50.

In each of the first exhaust ports 21, a first exhaust valve 23 may be disposed. The first exhaust valve 23 opens and/or closes the first exhaust port 21 and thereby opens and/or closes a portion between the combustion chamber 17 and the exhaust passage 50.

In each of the second exhaust ports 22, a second exhaust valve 24 may be disposed. The second exhaust valve 24 opens and/or closes the second exhaust port 22 and thereby opens and/or closes a portion between the combustion chamber 17 and the exhaust passage 50.

An opening area of the first exhaust port 21 to the combustion chamber 17 and an opening area of the second exhaust port 22 to the combustion chamber 17 may have the same size. Thus, the first exhaust valve 23 and the second exhaust valve 24 may have the same size.

When a direction in which the four cylinders 11 are aligned is set as a straight-line direction, the first exhaust port 21 of the first cylinder 11a and the first exhaust port 21 of the second cylinder 11b are adjacent to each other in the straight-line direction. The first exhaust port 21 of the third cylinder 11c and the first exhaust port 21 of the fourth cylinder 11d are adjacent in the straight-line direction. The second exhaust port 22 of the second cylinder 11b and the second exhaust port 22 of the third cylinder 11c are adjacent to each other in the straight-line direction.

The valve operating apparatus may be connected with each of the first exhaust valves 23 and each of the second exhaust valves 24. The valve operating apparatus opens and/or closes each of the first exhaust valves 23 and each of the second exhaust valves 24 at predetermined timings.

The valve operating apparatus may be a variable valve operating apparatus which makes the valve timing and/or the valve lift be variable. As illustrated in FIG. 3, the valve operating apparatus has an exhaust S-VT 241. The exhaust S-VT 241 may be of a hydraulic type or an electric type. The exhaust S-VT 241 may continuously changes a rotation phase of an exhaust camshaft in a predetermined angle range.

The exhaust system 1 may have a hydraulic lash adjuster (HLA) 242 having a valve stopping mechanism which stops an action of the first exhaust valve 23. The HLA 242 may be provided for each of the first exhaust valves 23.

The valve stopping mechanism of the HLA 242 is actuated when oil pressurized to a predetermined actuation hydraulic pressure is supplied and stops the first exhaust valve 23 of the cylinder 11, which is to be stopped, at a closed state. Because a known configuration (for example, Japanese Patent Laid-Open No. 2023-30763) can be employed for the valve stopping mechanism, a detailed description will not be made. The HLA 242 is one example of a flow amount adjustment unit.

The exhaust passage 50 includes a first exhaust passage 51 which communicates with the first exhaust ports 21, a second exhaust passage 52 which communicates with the second exhaust ports 22, and a third exhaust passage 53 in which the first exhaust passage 51 and the second exhaust passage 52 merge together.

For example, the first exhaust passage 51 has a first joining passage 51a, a second joining passage 51b, and a first collection passage 51c.

The first joining passage 51a may be a passage in which the first exhaust port 21 of the first cylinder 11a and the first exhaust port 21 of the second cylinder 11b are joined together. The second joining passage 51b may be a passage in which the first exhaust port 21 of the third cylinder 11c and the first exhaust port 21 of the fourth cylinder 11d are joined together. The first collection passage 51c may be a passage in which the first joining passage 51a and the second joining passage 51b are joined together.

For example, the exhaust strokes are consecutively performed between the first cylinder 11a and the second cylinder 11b and between the third cylinder 11c and the fourth cylinder 11d. Valve opening periods of the first exhaust valves 23 are devised, and exhaust interference is thereby caused not to occur in the first joining passage 51a and the second joining passage 51b. The valve opening period of the first exhaust valve 23 will be described later.

The first collection passage 51c is provided with an auxiliary exhaust catalyst 61. The auxiliary exhaust catalyst 61 is a catalyst which has a smaller capacity than that of the main exhaust catalyst 60. The auxiliary exhaust catalyst 61 may be a three-way catalyst.

The second exhaust passage 52 is an exhaust passage which is independent from the first exhaust passage 51. The second exhaust passage 52 is provided with no exhaust catalyst.

The second exhaust passage 52 has a first independent passage 52a, a second independent passage 52b, a third joining passage 52c, and a second collection passage 52d.

The first independent passage 52a may be a passage which extends from the second exhaust port 22 of the first cylinder 11a. The second independent passage 52b is a passage which extends from the second exhaust port 22 of the fourth cylinder 11d. The third joining passage 52c is a passage in which the second exhaust port 22 of the second cylinder 11b and the second exhaust port 22 of the third cylinder 11c are joined together. Because the exhaust strokes are not consecutively performed between the second cylinder 11b and the third cylinder 11c, the exhaust interference does not occur in the third joining passage 52c.

The second collection passage 52d may be a passage in which the first independent passage 52a, the second independent passage 52b, and the third joining passage 52c are collected. The second collection passage 52d extends such that a flow of the exhaust gas flowing through the second collection passage 52d is parallel with and in the same direction as a flow of the exhaust gas flowing through the first collection passage 51c.
For example, the second collection passage 52d extends in parallel with the first collection passage 51c.

An ejector 57 may be arranged between the first independent passage 52a, second independent passage 52b, and third joining passage 52c and the second collection passage 52d. The ejector 57 may have a nozzle portion which has a relatively narrow channel cross-sectional area and a diffuser portion which has a relatively wide channel cross-sectional area.

Particularly, the channel cross-sectional area of the nozzle portion is smaller than that of the second collection passage 52d. The channel cross-sectional area of the diffuser portion is approximately the same as that of the second collection passage 52d.

Downstream side end portions of the first independent passage 52a, the second independent passage 52b, and the third joining passage 52c are connected with the ejector 57 while being aligned such that height positions of the downstream side end portions agree with each other. The exhaust gas, which flows from the first independent passage 52a, the second independent passage 52b, and the third joining passage 52c into the ejector 57, passes through the nozzle portion, thereafter passes through the diffuser portion, and flows into the second collection passage 52d. The ejector 57 causes the exhaust gas to smoothly flow to the second collection passage 52d and thereby inhibits the exhaust interference among the first independent passage 52a, the second independent passage 52b, and the third joining passage 52c.

The third exhaust passage 53 is a passage in which the first collection passage 51c and the second collection passage 52d merge together.

Between the first collection passage 51c and second collection passage 52d and the third exhaust passage 53, a turbine housing 58 may be arranged in which a turbine 72 of the turbocharger 70 is arranged. The first collection passage 51c and the second collection passage 52d are joined together in the turbine housing 58. In other words, the first exhaust passage 51 and the second exhaust passage 52 are joined together in the turbine housing 58.

A wastegate valve 74 may be connected between the first collection passage 51c of the first exhaust passage 51 and the third exhaust passage 53 and between the second collection passage 52d of the second exhaust passage 52 and the third exhaust passage 53. The wastegate valve 74 is a valve which adjusts whether the exhaust gas passing through the first collection passage 51c and the second collection passage 52d is caused to flow into the turbine housing 58 or to flow to the third exhaust passage 53 while bypassing the turbine housing 58.

When the wastegate valve 74 is in the closed state, the exhaust gas flows into the turbine housing 58. When the wastegate valve 74 is in the closed state, the turbine 72 is rotated by the exhaust gas.

On the other hand, when the wastegate valve 74 is in an open state, the exhaust gas flows into the third exhaust passage 53 while bypassing the turbine housing 58. When the wastegate valve 74 is in the open state, rotation of the turbine 72 by the exhaust gas is inhibited.

The main exhaust catalyst 60 is arranged in the third exhaust passage 53. The main exhaust catalyst 60 may be a three-way catalyst. The exhaust gas passing through the main exhaust catalyst 60 passes through the third exhaust passage 53 and is discharged to the outside of the automobile.

### (1-4) Turbocharger

For example, as illustrated in FIG. 1, the turbocharger 70 has the compressor 71, the turbine 72, and a turbine shaft 73 which connects the compressor 71 with the turbine 72. When the turbine 72 is rotated by the exhaust gas, rotation is transmitted to the compressor 71 by the turbine shaft 73, and the compressor 71 is rotated.

As illustrated in FIG. 1, the turbocharger 70 may be a twin scroll turbocharger. The turbine housing 58 has a first scroll portion 58a and a second scroll portion 58b, which are independent from each other. The first scroll portion 58a is connected with the first exhaust passage 51, and the second scroll portion is connected with the second exhaust passage 52. The exhaust gas flowing through the first exhaust passage 51 and the exhaust gas flowing through the second exhaust passage 52 are supplied to the turbine 72 independently from each other.

### (2) Configuration of Control Apparatus

As illustrated in FIG. 3, a control apparatus of the engine system may include an ECU (engine control unit or electric control unit) 100 for operating the engine 10. The ECU 100 is a controller based on a known microcomputer and includes a central processing unit (CPU) 100a, a memory 100b, and an I/F circuit 100c.

The CPU 100a executes a program. The memory 100b is configured with a RAM (random access memory) or a ROM (read-only memory), for example, and stores programs and data.

The I/F circuit 100c inputs and/or outputs electric signals. The ECU 100 is one example of a controller. The ECU 100 is configured also as a controller of the exhaust system 1.

The ECU 100 is electrically connected with the injectors 15 and the spark plugs 16, for example. The ECU 100 controls each of the injectors 15 and the spark plugs 16.

As illustrated in FIG. 1 and FIG. 3, one or various sensors SW1 to SW8 are connected with the ECU 100. Each of the sensors SW1 to SW8 outputs a signal to the ECU 100. The sensors include e.g., the following sensors.
An air flow sensor SW1 which is arranged in a downstream position relative to the air cleaner 41 in the intake passage 40 and measures a flow amount of air flowing through the intake passage 40.
An accelerator position sensor SW2 which is mounted on an accelerator pedal mechanism and measures an accelerator position corresponding to an operation amount of the accelerator pedal.
A supercharging pressure sensor SW3 which is mounted on the surge tank 42 and measures a pressure of air supercharged by the turbocharger 70.
A crank angle sensor SW4 which is mounted on the engine 10 and measures a rotation angle of the crankshaft.
A first A/F sensor SW5 which is arranged in an upstream position relative to the main exhaust catalyst 60 in the third exhaust passage 53 and detects an oxygen concentration in the exhaust gas.
A second A/F sensor SW6 which is arranged in a downstream position relative to the main exhaust catalyst 60 in the third exhaust passage 53 and detects the oxygen concentration in the exhaust gas.
A main exhaust catalyst temperature sensor SW7 which is arranged on the main exhaust catalyst 60 and measures a temperature of the main exhaust catalyst 60.
An auxiliary exhaust catalyst temperature sensor SW8 which is arranged on the auxiliary exhaust catalyst 61 and measures the temperature of the main exhaust catalyst 60.

Based on signals of those sensors SW1 to SW8, the ECU 100 assesses an operation state of the engine 10 and computes a control amount of each device in accordance with control logics which are defined in advance. The control logics are stored in the memory 100b. The control logics include computing a target amount and/or the control amount by using a map stored in the memory 100b.

The ECU 100 outputs electric signals related to the computed control amounts to the injectors 15, the spark plugs 16, the throttle valve 43, the wastegate valve 74, the intake S-VT 231, the exhaust S-VT 241, and the HLAs 242.

### (3) Operation Control Map for Engine

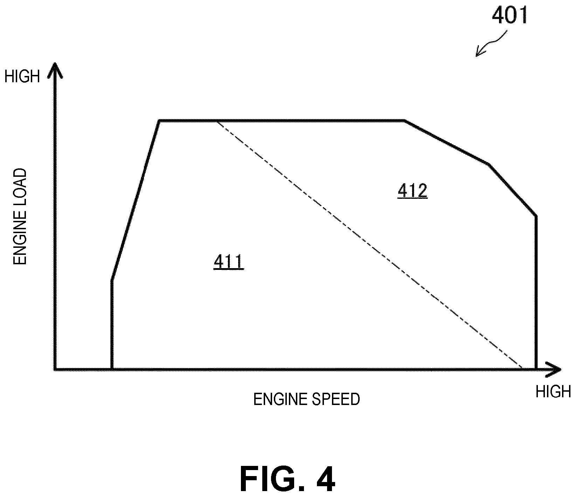

FIG. 4 illustrates, as an example, a base map related to control of the engine 10. FIG. 4 illustrates a first base map 401 about control of the first exhaust valves 23 and the second exhaust valves 24.

The first base map 401 is stipulated or defined by an engine load and/or an engine speed. In rough classification with respect to a level of the engine load and a level of the engine speed, the first base map 401 is divided into a plurality of regions, particularly two regions of a first operation region 411 and a second operation region 412 in a region with a lower load than a full load line ML. The engine load at a boundary line BL corresponds to a predetermined load, and a revolution speed (or a rotational speed) at the boundary line BL corresponds to a predetermined revolution speed. The boundary line BL is positioned on a lower load side as the engine speed becomes higher. In other words, according to the boundary lines BL, the engine load becomes lower as the engine speed becomes higher.

The first operation region 411 is a region in which the engine load is smaller than the engine load at the boundary line BL and the engine speed is lower than the engine speed at the boundary line BL. In other words, the first operation region 411 is an operation region in which the engine load is smaller than the predetermined load and the engine speed is lower than the predetermined revolution speed.

The second operation region 412 is a region in which the engine load is equal to or greater than the engine load at the boundary line BL and the engine speed is equal to or higher than the engine speed at the boundary line BL. In other words, the second operation region 412 is an operation region in which the engine load is equal to or greater than the predetermined load and the engine speed is equal to or higher than the predetermined revolution speed. The boundary line BL belongs to the second operation region 412.

When the operation state of the engine 10 belongs to the first operation region 411, the ECU 100 may stops a flow of the exhaust gas from the second exhaust passage 52 to the third exhaust passage 53. For example, the ECU 100 stops open-close actions of the second exhaust valves 24 at the closed state by the HLAs 242. Meanwhile, the ECU 100 causes the first exhaust valves 23 to open and/or close in accordance with reciprocating actions of the pistons 14. Accordingly, the exhaust gas produced in the cylinders 11 does not flow into the second exhaust passage 52 but flows only into the first exhaust passage 51.

When the operation state of the engine 10 belongs to the first operation region 411, the ECU 100 may make valve opening times of the first exhaust valves 23 be different in accordance with whether the engine 10 is in a cold state or in a warm state. The valve opening time of the first exhaust valve 23 will be described later. Note that the first operation region 411 itself is a region having the same engine load and the same engine speed even when the engine 10 is in the cold state or the warm state.

When the operation state of the engine 10 belongs to the second operation region 412, the ECU 100 may cause the exhaust gas to flow from both of the first exhaust passage 51 and the second exhaust passage 52 to the third exhaust passage 53. The ECU 100 makes different the valve opening times of the first exhaust valves 23 and the valve opening times of the second exhaust valves 24. The valve opening time of the first exhaust valve 23 and the valve opening time of the second exhaust valve 24 will be described later. Note that the second operation region 412 itself may be a region having the same engine load and the same engine speed even when the engine 10 is in the cold state or the warm state.

### (4) Open-Close Control of Exhaust Valve

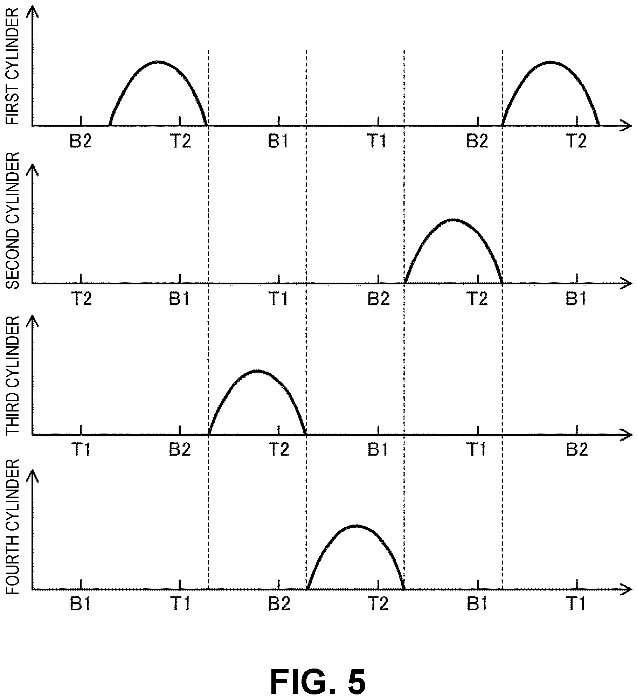

FIG. 5, FIG. 6, and FIG. 7 illustrate examples of the valve opening periods of the first exhaust valves 23 and the second exhaust valves 24. FIG. 5 illustrates control in a case where the engine 10 is in the cold state and the operation state of the engine 10 belongs to the first operation region 411 (hereinafter, referred to as a first mode).

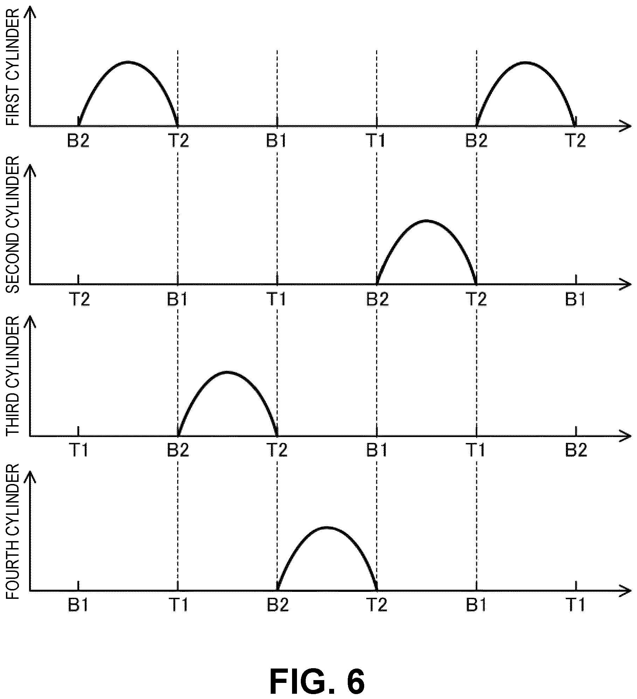

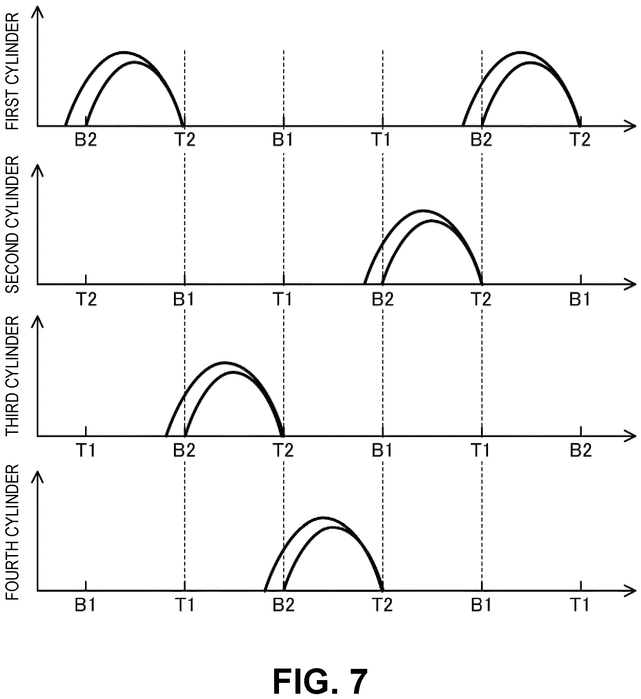

FIG. 6 illustrates control in a case where the engine 10 is in the warm state and the operation state of the engine 10 belongs to the first operation region 411 (hereinafter, referred to as a second mode). FIG. 7 illustrates control in a case where the operation state of the engine 10 belongs to the second operation region 412 (hereinafter, referred to as a third mode).

In the present embodiment, whether the engine 10 is in the cold state or in the warm state may be determined based on the temperature of the main exhaust catalyst 60 (a detection result of the main exhaust catalyst temperature sensor SW7). For example, a state where the temperature of the main exhaust catalyst 60 is lower than a predetermined temperature, e.g., 300°C, may be the cold state, and a state where the temperature is the predetermined temperature, e.g., 300°C, or higher may be the warm state.

FIG. 5, FIG. 6, and FIG. 7 illustrate the valve opening periods of the first exhaust valves 23 and the second exhaust valves 24 of, from the top, the first cylinder 11a, the second cylinder 11b, the third cylinder 11c, and the fourth cylinder 11d. In each of FIG. 5, FIG. 6, and FIG. 7, "B1" denotes a timing of a bottom dead center in the intake stroke, "T1" denotes a timing of a top dead center in the compression stroke, "B2" denotes a timing of the bottom dead center in the expansion stroke, and "T2" denotes a timing of the top dead center in the exhaust stroke. In the following description, "B1" will be referred to as an intake bottom dead center, "T1" will be referred to as a compression top dead center, "B2" will be referred to as an expansion bottom dead center, and "T2" will be referred to as an exhaust top dead center.

As illustrated in FIG. 5, in the first mode, only the first exhaust valves 23 open and/or close. The first exhaust valve 23 opens or starts opening at a timing after the expansion bottom dead center B2 and before the exhaust top dead center T2, and closes at a timing after the exhaust top dead center T2 and before the intake bottom dead center B1.

The valve opening period of the first exhaust valve 23 may be set to a period in which the valve opening period of one first exhaust valve 23 does not overlap the valve opening periods of the other first exhaust valves 23. The valve opening period corresponds to 180° of the crank angle, for example. Note that although details will be described later, in the first mode, the valve opening time of the first exhaust valve 23 is retarded compared to that in the second mode.

In the first mode, the first exhaust valve 23 is opened or starts opening at the timing after the expansion bottom dead center B2, and the exhaust gas at a high temperature thereby flows into the first exhaust passage 51. Because the piston 14 rises after the expansion bottom dead center B2, the exhaust gas is compressed in the cylinder 11. The exhaust gas is compressed, and the temperature of the exhaust gas thereby rises in the cylinder 11. The first exhaust valve 23 is thereafter opened, and the exhaust gas at a high temperature thereby flows into the first exhaust passage 51.

The exhaust gas at a high temperature flows into the first exhaust passage 51, and the auxiliary exhaust catalyst 61 can thereby efficiently be warmed up.

In the first mode, the first exhaust valves 23 may be set as described above, and the exhaust interference in the first joining passage 51a and the second joining passage 51b may be thereby inhibited. For example, in the first joining passage 51a, the first exhaust port 21 of the first cylinder 11a and the first exhaust port 21 of the second cylinder 11b are joined together.

As illustrated in FIG. 5, because at the same time as the first exhaust valve 23 of the second cylinder 11b is closed, the first exhaust valve 23 of the first cylinder 11a opens or starts opening, the exhaust gas does not simultaneously flow out from the first cylinder 11a and the second cylinder 11b. The same applies to the second joining passage 51b.

As illustrated in FIG. 6, in the second mode, only the first exhaust valves 23 open and/or close. In the second mode, the valve opening time of the first exhaust valve 23 may be a timing close to the expansion bottom dead center B2 compared to that in the first mode.

In other words, in the second mode, the valve opening time of the first exhaust valve 23 is advanced compared to that in the first mode. For example, in the second mode, the first exhaust valve 23 opens or starts opening at a timing of the expansion bottom dead center B2, and closes at a timing of the exhaust top dead center T2.

Because the first exhaust valve 23 opens or starts opening at the timing of the expansion bottom dead center B2, the valve opening period of the first exhaust valve 23 includes the expansion bottom dead center B2. The valve opening period of the first exhaust valve 23 is set to a period in which the valve opening period of one first exhaust valve 23 does not overlap the valve opening periods of the other first exhaust valves 23.

The valve opening period corresponds to 180° of the crank angle, for example. Note that the valve opening time of the first exhaust valve 23 does not have to strictly match the timing at which the piston 14 is positioned at the bottom dead center and may slightly be deviated from the timing at which the piston 14 is positioned at the bottom dead center.

In the second mode, the first exhaust valve 23 is opened or starts opening at the timing of the expansion bottom dead center B2, and the exhaust gas at a lower temperature than that in the first mode flows into the first exhaust passage 51. That is, based on the theory of adiabatic expansion (adiabatic compression), because in a state where the first exhaust valve 23 and the second exhaust valve 24 are closed, the pressure of the exhaust gas in the cylinder 11 becomes lowest at the timing of the expansion bottom dead center B2, the temperature of the exhaust gas in the cylinder 11 becomes lowest at the timing of the expansion bottom dead center B2. Thus, the first exhaust valve 23 is opened or starts opening at the timing of the expansion bottom dead center B2, and the exhaust gas at a temperature which is as low as possible can thereby be caused to flow into the first exhaust passage 51. The exhaust gas at a high temperature is inhibited from flowing into the first exhaust passage 51, and thermal degradation of the auxiliary exhaust catalyst 61 can thereby be inhibited.

In the second mode also, the first exhaust valves 23 are set as described above, and similarly to a case of the first mode, the exhaust interference in the first joining passage 51a and the second joining passage 51b is thereby inhibited.

As illustrated in FIG. 7, in the third mode, both of the first exhaust valve 23 and the second exhaust valve 24 open and/or close. For example, the first exhaust valve 23 opens or starts opening at the timing of the expansion bottom dead center B2 and closes at the timing of the exhaust top dead center T2.

The valve opening period of the first exhaust valve 23 is set to a period in which the valve opening period of one first exhaust valve 23 does not overlap the valve opening periods of the other first exhaust valves 23. The valve opening period of the first exhaust valve 23 corresponds to 180° of the crank angle, for example. Note that the valve opening time of the first exhaust valve 23 does not have to strictly match the timing at which the piston 14 is positioned at the bottom dead center and may slightly be deviated from the timing at which the piston 14 is positioned at the bottom dead center.

Meanwhile, the valve opening time of the second exhaust valve 24 is advanced relatively to that of the first exhaust valve 23. In other words, the valve opening time of the first exhaust valve 23 is retarded relatively to the valve opening time of the second exhaust valve 24.

The valve opening time of the second exhaust valve 24 is a timing before the expansion bottom dead center B2. For example, the second exhaust valve 24 opens or starts opening at a timing after the compression top dead center T1 and before the expansion bottom dead center B2, and closes at the timing of the exhaust top dead center T2.

The valve opening period of the second exhaust valve 24 may be longer than the valve opening period of the first exhaust valve 23. Thus, the valve opening period of one second exhaust valve 24 overlaps the valve opening period of the other second exhaust valve 24. Because the third joining passage 52c joins together the first exhaust ports 21 of the cylinders 11 between which the exhaust strokes are not consecutively performed, even when the valve opening periods of the second exhaust valves 24 are set as described above, the exhaust interference does not occur in the third joining passage 52c.

In the third mode, the second exhaust valve 24 is opened or starts opening at the timing before the expansion bottom dead center B2, and the exhaust gas at a high temperature thereby flows into the second exhaust passage 52. At a timing before the expansion bottom dead center B2, the exhaust gas is in a more compressed state than at the expansion bottom dead center B2 and is in a state where a heat dissipation amount to the engine 10 is small. Thus, the second exhaust valve 24 is opened, and the exhaust gas at a high temperature thereby flows into the second exhaust passage 52.

The exhaust gas at a high temperature flows into the second exhaust passage 52, and the main exhaust catalyst 60 can thereby efficiently be warmed up.

In the third mode, the valve opening time of the first exhaust valve 23 is retarded relatively to the valve opening time of the second exhaust valve 24, particularly, is set to the timing of the expansion bottom dead center B2, and the exhaust gas at a comparatively low temperature flows into the first exhaust passage 51. After the second exhaust valve 24 is opened, the pressure in the cylinder 11 is lowered. Further, the exhaust gas is in a state where heat is dissipated to the engine 10. Thus, the temperature of the exhaust gas to flow into the first exhaust passage 51 becomes low.

The exhaust gas at a comparatively low temperature flows into the first exhaust passage 51, and thermal degradation of the auxiliary exhaust catalyst 61 can thereby be inhibited.

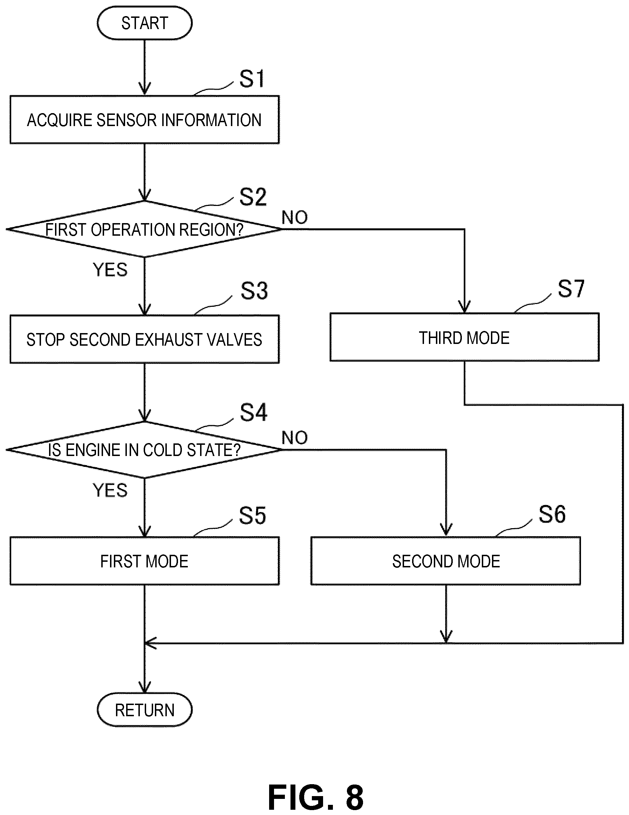

Next, with reference to FIG. 8, a description will be made about a process by the ECU 100 in a case where the exhaust system 1 is controlled.

First, in step S1, the ECU 100 may acquire information of each of the sensors SW1 to SW8.

Next, in step S2, the ECU 100 may determine whether or not the operation state of the engine 10 belongs to the first operation region 411. In a case of YES where the operation state of the engine 10 belongs to the first operation region 411, the ECU 100 moves to step S3. On the other hand, in a case of NO where the operation state of the engine 10 belongs to the second operation region 412, the ECU 100 moves to step S7.

In the step S3, the ECU 100 may actuate the valve stopping mechanisms of the HLAs 242 and thereby stop the open-close actions of the second exhaust valves 24.

In next step S4, the ECU 100 may determine whether or not the engine is in the cold state. The ECU 100 may determine whether or not the engine 10 is in the cold state based on the temperature of the main exhaust catalyst 60. In a case of YES where the engine 10 is in the cold state, the ECU 100 moves to step S5. On the other hand, in a case of NO where the engine 10 is in the warm state, the ECU 100 moves to step S6.

In the step S5, the ECU 100 may control the first exhaust valves 23 in the first mode. The ECU 100 opens or starts opening each of the first exhaust valves 23 after the expansion bottom dead center and before the exhaust top dead center, and closes each of the first exhaust valves 23 after the exhaust top dead center and before the intake bottom dead center. After step S5, the process returns.

In the step S6, the ECU 100 may control the first exhaust valves 23 in the second mode. The ECU 100 opens or starts opening each of the first exhaust valves 23 at the expansion bottom dead center, and closes each of the first exhaust valves 23 at the exhaust top dead center. After step S6, the process returns.

In the step S7, the ECU 100 may control the first exhaust valves 23 and the second exhaust valves 24 in the third mode. The ECU 100 opens or starts opening each of the first exhaust valves 23 at the expansion bottom dead center, and closes each of the first exhaust valves 23 at the exhaust top dead center. Further, the ECU 100 opens or starts opening each of the second exhaust valves 24 after the compression top dead center and before the expansion bottom dead center, and closes each of the second exhaust valves 24 at the exhaust top dead center. After step S11, the process returns.

### (5) Effects of Embodiment

In the exhaust system 1 according to the present embodiment, the exhaust passage 50 includes the first exhaust passage 51 which is opened and/or closed by the first exhaust valves 23, the second exhaust passage 52 which causes the exhaust gas to flow independently from the first exhaust passage 51 and which is opened and/or closed by the second exhaust valves 24, and the third exhaust passage in which the first exhaust passage 51 and the second exhaust passage 52 merge together. The exhaust catalysts include the main exhaust catalyst 60 which is provided in the third exhaust passage 53 and the auxiliary exhaust catalyst 61 which is arranged in the first exhaust passage 51 and has a smaller capacity than that of the main exhaust catalyst 60. The exhaust system 1 has the first exhaust passage 51 and the second exhaust passage 52 which can cause the exhaust gas to flow independently from each other, and the auxiliary exhaust catalyst 61 is provided only in the first exhaust passage 51. Thus, when the flow amount of the exhaust gas is large, the flow amount of the exhaust gas in the first exhaust passage 51 is made smaller than the flow amount of the exhaust gas in the second exhaust passage 52, and the exhaust system 1 can thereby inhibit a large amount of exhaust gas from passing through the auxiliary exhaust catalyst 61. The exhaust system 1 can inhibit thermal degradation of the auxiliary exhaust catalyst 61.

Further, the second exhaust passage 52 does not have the auxiliary exhaust catalyst 61. Thus, the exhaust gas flowing through the second exhaust passage 52 is, without any change, introduced into the third exhaust passage 53 and passes through the main exhaust catalyst 60. In the exhaust system 1, when an exhaust gas amount is large, the exhaust gas is caused to flow through the second exhaust passage 52, and the main exhaust catalyst 60 can thereby efficiently be warmed up.

Particularly, in the present embodiment, the second exhaust passage 52 has the ejector 57. Because the exhaust system 1 can cause the exhaust gas in the second exhaust passage 52 to flow as early as possible by the ejector 57, the exhaust interference in the second exhaust passage 52 can be inhibited.

Further particularly, in the present embodiment, when the operation state of the engine 10 belongs to the first operation region 411 in which the engine load is smaller than the predetermined load and the engine speed is lower than the predetermined revolution speed, the ECU 100 actuates the HLAs 242 so as to stop the flow of the exhaust gas from the second exhaust passage 52 to the third exhaust passage 53. When the operation state of the engine 10 is in the first operation region 411, because the exhaust gas amount is comparatively small, the exhaust gas is caused to flow only through the first exhaust passage 51. Accordingly, the exhaust system 1 can efficiently warm up the auxiliary exhaust catalyst 61 even when the exhaust gas amount is small.

Further particularly, in the exhaust system 1, because the exhaust gas flows only through the first exhaust passage 51, the exhaust gas is supplied only to the first scroll portion 58a of the turbine housing 58. Accordingly, an exhaust gas pressure in the first scroll portion 58a becomes high, and the turbine 72 can thereby efficiently be rotated. The exhaust system 1 can improve operation efficiency of the engine 10.

Further particularly, the second exhaust valve 24 is configured to reduce a flow amount of the exhaust gas from the second exhaust passage 52 to the third exhaust passage 53 as the engine load becomes smaller and/or as the engine speed becomes lower.

Further particularly, in the present embodiment, when the operation state of the engine 10 belongs to the first operation region 411 and the engine 10 is in the cold state, the ECU 100 makes the valve opening time of the first exhaust valve 23 be retarded, compared to a case where the operation state of the engine 10 belongs to the first operation region 411 and the engine 10 is in the warm state, and be later than the expansion bottom dead center. Accordingly, the exhaust gas at a high temperature which is compressed in the combustion chamber 17 flows into the first exhaust passage 51. The exhaust system 1 can cause the exhaust gas at a high temperature to pass through the auxiliary exhaust catalyst 61. The exhaust system 1 can efficiently warm up the auxiliary exhaust catalyst 61.

Further particularly, the first exhaust valve 23 is configured to retard the valve opening time of the first exhaust valve 23 as the temperature of the main exhaust catalyst 60 becomes lower.

Further particularly, in the present embodiment, when the operation state of the engine 10 belongs to the first operation region 411 and the engine 10 is in the warm state, the ECU 100 sets the valve opening period of the first exhaust valve 23 to a period which includes the expansion bottom dead center. Accordingly, when the engine 10 is in the warm state, the exhaust gas at a temperature, which is as low as possible, flows into the first exhaust passage 51. The exhaust system 1 can inhibit thermal degradation of the auxiliary exhaust catalyst 61.

Further particularly, in the present embodiment, when the operation state of the engine 10 belongs to the first operation region 411 and the engine 10 is in the warm state, the ECU 100 sets the valve opening time of the first exhaust valve 23 to the timing of the expansion bottom dead center. Accordingly, when the engine 10 is in the warm state, the exhaust gas, which is maximally expanded in the combustion chamber 17 and whose temperature is lowered, flows into the first exhaust passage 51. The exhaust system 1 can inhibit thermal degradation of the auxiliary exhaust catalyst 61.

Further particularly, in the present embodiment, when the operation state of the engine 10 belongs to the second operation region 412 in which the engine load is equal to or smaller than the predetermined load and the engine speed is equal to or lower than the predetermined revolution speed, the ECU 100 retards the valve opening time of the first exhaust valve 23 relatively to the valve opening time of the second exhaust valve 24. The second exhaust valve 24 is opened earlier than the first exhaust valve 23, the exhaust gas at a comparatively high temperature thereby flows into the second exhaust passage 52, and the exhaust gas at a comparatively low temperature flows into the first exhaust passage 51. Accordingly, the exhaust system 1 can efficiently warm up the main exhaust catalyst 60 and can inhibit thermal degradation of the auxiliary exhaust catalyst 61.

Further particularly, in the present embodiment, when the operation state of the engine 10 belongs to the second operation region 412, the ECU 100 makes the valve opening period of a second exhaust valve 23 be longer than the valve opening period of a first exhaust valve 21. The exhaust system 1 causes the exhaust gas to flow into the second exhaust passage 52 as much as possible and can thereby decrease the flow amount of the exhaust gas in the first exhaust passage 51. Accordingly, the exhaust system 1 can inhibit thermal degradation of the auxiliary exhaust catalyst 61.

Further particularly, in the present embodiment, when the operation state of the engine 10 belongs to the second operation region 412, the ECU 100 opens or starts opening the second exhaust valve 24 after the compression top dead center and before the expansion bottom dead center. Before the expansion bottom dead center, the exhaust gas is in a more compressed state than at the expansion bottom dead center, is in a state where the heat dissipation amount to the engine 10 is small, and is thus in a state where the temperature is high. The exhaust system 1 can cause as large amount as possible of the exhaust gas at a comparatively high temperature to flow into the second exhaust passage 52. On the other hand, only as small amount as possible of the exhaust gas at a comparatively low temperature can be caused to flow into the first exhaust passage 51. Accordingly, the exhaust system 1 can efficiently warm up the main exhaust catalyst 60 and can inhibit thermal degradation of the auxiliary exhaust catalyst 61.

Further particularly, in the present embodiment, when the operation state of the engine 10 belongs to the second operation region 412, the ECU 100 causes the first exhaust valve 23 to be opened or started opening at the timing of the expansion bottom dead center. Accordingly, when the operation state of the engine 10 belongs to the second operation region 412, the exhaust gas, which is maximally expanded in the combustion chamber 17 and whose temperature is lowered, flows into the first exhaust passage 51. The exhaust system 1 can inhibit thermal degradation of the auxiliary exhaust catalyst 61.

Further particularly, in the present embodiment, between the first exhaust passage 51 and second exhaust passage 52 and the third exhaust passage 53, the turbine housing 58 is arranged in which the turbine 72 of the twin scroll turbocharger is arranged, and the first exhaust passage 51 and the second exhaust passage 52 are joined together in the turbine housing 58. Accordingly, the exhaust system 1 can inhibit the exhaust interference between the exhaust gas flowing through the first exhaust passage 51 and the exhaust gas flowing through the second exhaust passage 52.

Further particularly, in the present embodiment, the first exhaust passage 51 has the first joining passage 51a and the second joining passage 51b, each of which connects together one pair of first exhaust ports 21 being adjacent in the straight-line direction in which the cylinders 11 are aligned, and the first collection passage 51c in which the first joining passage 51a and the second joining passage 51b are joined together. Accordingly, in the exhaust system 1, compared to a case where the first exhaust passage 51 is formed as an independent passage for each of the cylinders 11, a configuration of the first exhaust passage 51 can be made compact.

Further particularly, in the present embodiment, the ECU 100 sets the valve opening period of the first exhaust valve 23 to the period in which the valve opening period of one first exhaust valve 23 does not overlap the valve opening periods of the other first exhaust valves 23. Thus, even when each of the first joining passage 51a and the second joining passage 51b connects together the cylinders 11 between which the exhaust strokes are consecutively performed, the exhaust system 1 can inhibit the exhaust interference in the first joining passage 51a and the second joining passage 51b.

Further particularly, in the present embodiment, the second exhaust passage 52 has the third joining passage 52c that connects together the second exhaust ports 22, which are adjacent in the straight-line direction, in which the cylinders 11 are aligned, and between which the exhaust strokes are not consecutively performed. Accordingly, in the exhaust system 1, compared to a case where the second exhaust passage 52 is formed as an independent passage for each of the cylinders 11, a configuration of the second exhaust passage 52 can be made compact.

### (Modification)

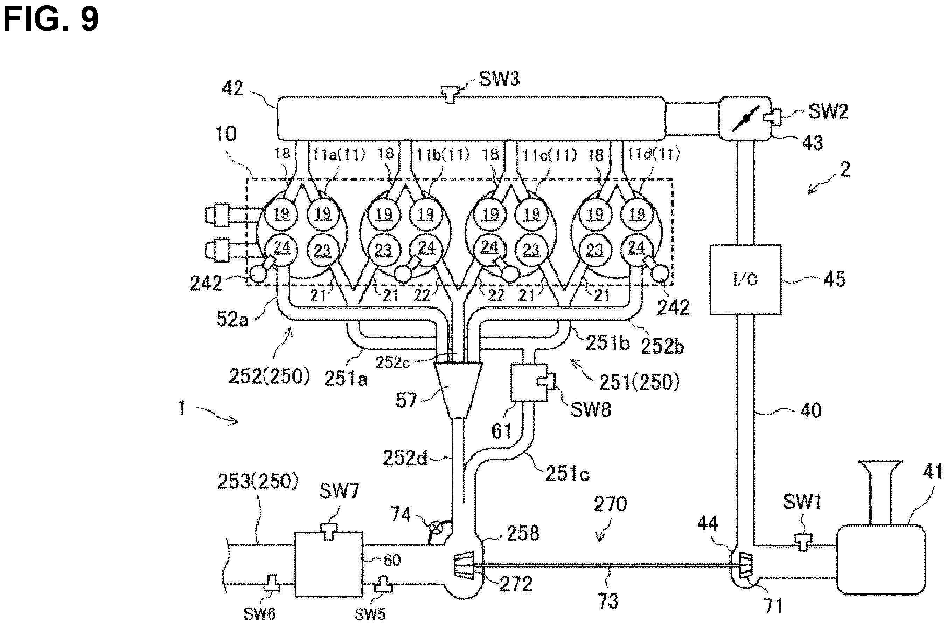

FIG. 9 illustrates a modification of the above-described embodiment. The modification is different from the above-described embodiment in configurations of the exhaust passage 50 and a turbocharger 270. For example, in the modification, the turbocharger 270 is not the twin scroll turbocharger but is a turbocharger which has only one scroll portion. The exhaust passage 50 is different from the embodiment in a configuration around a turbine housing 258 in which a turbine 272 of the turbocharger 270 is arranged.

As illustrated in FIG. 9, an exhaust passage 250 of an exhaust system 201 includes a first exhaust passage 251, a second exhaust passage 252, and a third exhaust passage 253.

The first exhaust passage 251 may have a first joining passage 251a, a second joining passage 251b, and a first collection passage 251c. Because configurations of the first joining passage 251a and the second joining passage 251b are the same as those of the embodiment, descriptions thereof will not be made.

The second exhaust passage 252 may have a first independent passage 252a, a second independent passage 252b, a third joining passage 252c, and a second collection passage 252d. Because configurations of the first independent passage 252a, the second independent passage 252b, and the third joining passage 252c are the same as those of the embodiment, descriptions thereof will not be made.

The third exhaust passage 253 may extend to an upstream side relative to the turbine housing 258. In other words, this is a state where the turbine housing 258 is arranged in a halfway portion of the third exhaust passage 253. The wastegate valve 74 may be provided in a passage which connects a portion in the third exhaust passage 253 on the upstream side relative to the turbine housing 258 with a portion in the third exhaust passage 253 on a downstream side relative to the turbine housing 258.

The first collection passage 251c and the second collection passage 252d may be connected with the third exhaust passage 253 on the upstream side relative to the turbine housing 258. The first collection passage 251c and the second collection passage 252d extend in parallel with each other in a connection portion to the third exhaust passage 253. For example, in the connection portion to the third exhaust passage 253, the first collection passage 251c and the second collection passage 252d extend such that a flow of the exhaust gas flowing through the first collection passage 251c and a flow of the exhaust gas flowing through the second collection passage 252d are in the same direction.

The exhaust system 201 according to the present modification also causes the exhaust gas to flow, mutually independently, through the first exhaust passage 251 and the second exhaust passage 252. Further, the auxiliary exhaust catalyst 61 is arranged only in the first exhaust passage 251. Thus, the exhaust system 201 according to the present modification can also inhibit thermal degradation of the auxiliary exhaust catalyst 61.

Further particularly, in the exhaust system 201 according to the present modification, the first exhaust passage 251 and the second exhaust passage 252 are joined together so as to be parallel with each other on the upstream side relative to the turbine housing 258 in which the turbine 272 is arranged. The exhaust system 201 can inhibit a flow of the exhaust gas flowing into the turbine housing 258 from deteriorating due to the exhaust interference between the exhaust gas flowing through the first exhaust passage 51 and the exhaust gas flowing through the second exhaust passage 52.

### (8) Other Embodiments

The technique disclosed herein is not limited to the above-described embodiment and can be substituted without departing from the gist of the scope of the claims.

For example, in the above-described embodiment, the turbocharger 70 or 270 is provided, but the turbocharger 70 and 270 are not required configurations and may be omitted.

In the above-described embodiment, when the operation state of the engine 10 belongs to the first operation region 411, the open-close actions of the second exhaust valves 24 are stopped by the HLAs 242, and the flow of the exhaust gas from the second exhaust passage 52 to the third exhaust passage 53 is thereby stopped. This is not restrictive, an exhaust shutter valve is provided in each of the second collection passage 52d and 252d, and the flow of the exhaust gas from the second exhaust passage 52 to the third exhaust passage 53 may thereby be stopped. That is, when the operation state of the engine 10 belongs to the first operation region 411, the exhaust shutter valve may be closed.

In first and second embodiments, the first exhaust valve 23 and the second exhaust valve 24 have the same size. This is not restrictive, and the first exhaust valve 23 and the second exhaust valve 24 may have different sizes. For example, in a case where an output of the engine 10 is desired to be made high in the second operation region 412, the first exhaust valve 23 may be made larger than the second exhaust valve 24. Further, in a case where it is desired to actively lower the temperature of the exhaust gas flowing through the first exhaust passage 51 in the second operation region 412, the second exhaust valve 24 may be made larger than the first exhaust valve 23.

In the above-described embodiment, in the second mode, the valve opening time of the first exhaust valve 23 is the timing of the expansion bottom dead center B2. This is not restrictive, and the valve opening time of the first exhaust valve 23 may be earlier than the expansion bottom dead center B2. Further, in the second mode, the valve opening period of the first exhaust valve 23 may correspond to an angle which is slightly larger than 180° (approximately 200°). When the operation state of the engine 10 belongs to the first operation region 411, the flow amount (volume) of the exhaust gas is small. Further, when the valve opening period of the first exhaust valve 23 corresponds to an angle larger than 180°, the first exhaust valve 23 opens in the expansion stroke. Thus, the exhaust gas is not all at once discharged to the first exhaust passage 51. Even when as in the embodiment, the first exhaust passage 51 connects together the cylinders 11 between which the exhaust strokes are consecutively performed, the exhaust interference is not likely to occur.

The above-described embodiments are only examples, and the scope of the present disclosure should not restrictively be interpreted. The scope of the present disclosure is defined by the claims, and all modifications and changes belonging to the equivalent scope of the claims are included in the scope of the present disclosure.

### [Industrial Applicability]

The technique disclosed herein is useful as an exhaust system.

### [Reference Signs List]

1 exhaust system
10 engine
17 combustion chamber
23 first exhaust valve
24 second exhaust valve
40 intake passage
50 exhaust passage
51 first exhaust passage
52 second exhaust passage
53 third exhaust passage
57 ejector
58 turbine housing
60 main exhaust catalyst
61 auxiliary exhaust catalyst
70 turbocharger
72 turbine
100 ECU (controller)
242 hydraulic lash adjuster (flow amount adjustment unit)
250 exhaust passage
251 first exhaust passage
252 second exhaust passage
253 third exhaust passage
258 turbine housing
270 turbocharger
272 turbine
411 first operation region
412 second operation region

## Claims

1. An exhaust system (1) comprising:
an exhaust passage (50; 250) through which exhaust gas flows;
a first exhaust valve (23) and a second exhaust valve (24), each of which is configured to open and/or close a portion between a combustion chamber (17) of an engine (10) and the exhaust passage (50; 250); and
a plurality of exhaust catalysts (60, 61) which are provided in the exhaust passage (50; 250) and configured to purify the exhaust gas, wherein
the exhaust passage (50; 250) includes
a first exhaust passage (51; 251) which is configured to be opened and/or closed by the first exhaust valve (23),
a second exhaust passage (52; 252) through which the exhaust gas is caused to flow independently from the first exhaust passage (51; 251) and which is configured to be opened and/or closed by the second exhaust valve (24), and
a third exhaust passage (53; 253) in which the first exhaust passage (51; 251) and the second exhaust passage (52; 252) merge together, and
the exhaust catalysts (60, 61) include
a main exhaust catalyst (60) which is provided in the third exhaust passage (53; 253) and
an auxiliary exhaust catalyst (61) which is arranged in the first exhaust passage (51; 251) and has a smaller capacity than the main exhaust catalyst (60).

2. The exhaust system (1) according to claim 1, wherein the second exhaust passage (52; 252) has an ejector (57) .

3. The exhaust system (1) according to claim 1 or 2, further comprising:
a flow amount adjustment unit (242) which is configured to adjust a flow amount of the exhaust gas from the second exhaust passage (52; 252) to the third exhaust passage (53; 253); and
a controller (100) which actuates the flow amount adjustment unit (242), wherein
when an operation state of the engine (10) belongs to a first operation region (411) in which an engine load is smaller than a predetermined load and an engine speed is lower than a predetermined revolution speed, the controller (100) is configured to actuate the flow amount adjustment unit (242) so as to stop a flow of the exhaust gas from the second exhaust passage (52; 252) to the third exhaust passage (53; 253).

4. The exhaust system (1) according to claim 3, wherein
when the operation state of the engine (10) belongs to the first operation region (411) and the engine (10) is in a cold state, the controller (100) is configured to make a valve opening time of the first exhaust valve (23) be retarded, compared to a case where the operation state of the engine (10) belongs to the first operation region (411) and the engine (10) is in a warm state, and be later than a timing at which a piston of the engine (10) is positioned at a bottom dead center (B2) in an expansion stroke.

5. The exhaust system (1) according to claim 4, wherein
when the operation state of the engine (10) belongs to the first operation region (411) and the engine (10) is in the warm state, the controller (100) is configured to set a valve opening period of the first exhaust valve (23) to a period which includes the timing at which the piston of the engine (10) is positioned at the bottom dead center (B2) in the expansion stroke.

6. The exhaust system (1) according to claim 4 or 5, wherein
the cold state is a state where a temperature of the main exhaust catalyst (60) is lower than a predetermined temperature, and
the warm state is a state where the temperature of the main exhaust catalyst (60) is the predetermined temperature or higher.

7. The exhaust system (1) according to claim 1 or 2, further comprising
a controller (100) which is configured to actuate the first exhaust valve (23) and the second exhaust valve (24), wherein
when an operation state of the engine (10) belongs to a second operation region (412) in which an engine load is equal to or greater than a predetermined load and an engine speed is equal to or higher than a predetermined revolution speed, the controller is configured to retard a valve opening time of the first exhaust valve (23) relatively to a valve opening time of the second exhaust valve (24).

8. The exhaust system (1) according to any one of claims 3 to 6, wherein
the controller (100) is further configured to actuate the first exhaust valve (23) and the second exhaust valve (24), wherein
when an operation state of the engine (10) belongs to a second operation region (412) in which the engine load is equal to or greater than the predetermined load and the engine speed is equal to or higher than the predetermined revolution speed, the controller is configured to retard a valve opening time of the first exhaust valve (23) relatively to a valve opening time of the second exhaust valve (24).

9. The exhaust system (1) according to claim 7 or 8, wherein
when the operation state of the engine (10) belongs to the second operation region (412), the controller is configured to make the valve opening period of the second exhaust valve (24) be longer than the valve opening period of the first exhaust valve (23).

10. The exhaust system (1) according to any one of claims 7 to 9, wherein
when the operation state of the engine (10) belongs to the second operation region (412), the controller is configured to make the valve opening time of the second exhaust valve (24) be earlier than a timing at which a piston of the engine (10) is positioned at a bottom dead center (B2) in an expansion stroke.

11. The exhaust system (1) according to claim 1 or 2, wherein
the second exhaust valve (24) is configured to reduce a flow amount of the exhaust gas from the second exhaust passage (52; 252) to the third exhaust passage (53; 253) as an engine load becomes smaller and/or as an engine speed becomes lower.

12. The exhaust system (1) according to claim 1, 2 or 13, wherein
the first exhaust valve (23) is configured to retard a valve opening time of the first exhaust valve (23) as the temperature of the main exhaust catalyst (60) becomes lower.

13. The exhaust system (1) according to any one of the preceding claims, further comprising
a turbine housing (58), in which a turbine (72) of a turbocharger (70) is arranged, wherein the turbine housing (58) is arranged in a portion in the third exhaust passage (53; 253) on an upstream side relative to the main exhaust catalyst (60).

14. An engine system comprising:
an engine (10); and
the exhaust system (1) according to any one of the preceding claims.

15. The engine system according to claim 14, further comprising an intake system (2) and/or a turbocharger (70) .
